(19) **Europäisches Patentamt / European Patent Office / Office européen des brevets**

(11) **EP 4 531 394 A1**

(12) **EUROPEAN PATENT APPLICATION**
published in accordance with Art. 153(4) EPC

(43) Date of publication:
02.04.2025 Bulletin 2025/14

(21) Application number: 23830065.1

(22) Date of filing: 20.06.2023

(51) International Patent Classification (IPC):
$H04N\ 19/149^{(2014.01)}$ $G06N\ 3/08^{(2023.01)}$

(52) Cooperative Patent Classification (CPC):
G06N 3/08; H04N 19/149; H04N 19/176;
H04N 19/182

(86) International application number:
PCT/CN2023/101495

(87) International publication number:
WO 2024/001886 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.06.2022 CN 202210770312

(71) Applicant: Sanechips Technology Co., Ltd.
Shenzhen, Guangdong 518055 (CN)

(72) Inventors:
• CAO, Zhou
Shenzhen, Guangdong 518055 (CN)

• XU, Ke
Shenzhen, Guangdong 518055 (CN)
• KONG, Dehui
Shenzhen, Guangdong 518055 (CN)
• YANG, Wei
Shenzhen, Guangdong 518055 (CN)
• REN, Cong
Shenzhen, Guangdong 518055 (CN)

(74) Representative: Canzler & Bergmeier
Patentanwälte
Partnerschaft mbB
Despag-Straße 6
85055 Ingolstadt (DE)

(54) **CODING UNIT DIVISION METHOD, ELECTRONIC DEVICE AND COMPUTER READABLE STORAGE MEDIUM**

(57)     The present disclosure provides a coding unit division method, an electronic device and a computer readable storage medium. The coding unit division method comprises: dividing an original image to obtain a plurality of coding tree units; by taking image blocks as granularity, dividing each coding tree unit into an image block one-dimensional array comprising a plurality of image blocks; performing visual attention mechanism calculation on the image blocks in the image block one-dimensional array to obtain a coding unit division depth corresponding to the image blocks in the image block one-dimensional array; and performing coding unit division on the coding tree units according to the coding unit division depth corresponding to the image blocks.

FIG. 1

# Description

## CROSS REFERENCE TO RELATED APPLICATIONS

The present disclosure claims the priority to Chinese Patent Application No. 202210770312.5 entitled "CODING UNIT DIVISION METHOD, ELECTRONIC DEVICE AND COMPUTER READABLE STORAGE MEDIUM" and filed on June 30, 2022, the contents of which are incorporated herein by reference in their entirety.

## TECHNICAL FIELD

The present disclosure relates to the field of communications, and in particular, to a coding unit division method, an electronic device, and a computer readable storage medium.

## BACKGROUND

With the improvement of material and spiritual standards of living of people, higher and higher requirements are proposed for high definition videos or even ultra-high definition videos. The core problem of how to reduce bandwidth consumption while ensuring video quality becomes the focus of research. Compared with the previous advanced video coding standard H264/Advanced Video Coding (AVC), H265/High Efficiency Video Coding (HEVC) greatly improves compression ratio by introducing a Coding Unit (CU) quadtree division structure and multi-angle intra prediction.

## SUMMARY

The present disclosure provides a coding unit division method, an electronic device, and a computer readable storage medium.

The present disclosure provides a coding unit division method, including: dividing an original image to obtain a plurality of coding tree units; with a patch taken as granularity, dividing each of the coding tree units into a patch one-dimensional array including a plurality of patches; performing vision attention mechanism calculation on each of the patches in the patch one-dimensional array to obtain a coding unit division depth corresponding to each of the patches in the patch one-dimensional array; and performing, for each of the coding tree units, coding unit division on the coding tree unit according to the coding unit division depth corresponding to each of the patches.

The present disclosure provides an electronic device, including: one or more processors; and a storage device having stored thereon one or more programs which, when executed by the one or more processors, cause the one or more processors to implement the coding unit division method according to the present disclosure.

The present disclosure provides a computer readable storage medium having stored thereon a computer program which, when executed by a processor, implements the coding unit division method according to the present disclosure.

## BRIEF DESCRIPTION OF DRAWINGS

FIG. 1 is a flowchart illustrating a coding unit division method according to the present disclosure.
FIG. 2 is a flowchart illustrating a conventional coding method.
FIG. 3 is a schematic diagram of a Vision Transformer-based CU division structure for video coding and decoding according to the present disclosure.
FIG. 4 is a correspondence table of CU division sizes and CU division depths.
FIG. 5 is a schematic diagram of division depths of a coding tree unit ($64 \times 64$).
FIG. 6 is a schematic diagram of an electronic device according to the present disclosure.
FIG. 7 is a schematic diagram of a computer readable storage medium according to the present disclosure.

## DETAIL DESCRIPTION OF EMBODIMENTS

It should be understood that the specific embodiments described herein are merely intended to explain the present disclosure, rather than limiting the present disclosure.

In the following description, the terms such as "module", "component" and "unit" used to indicate elements are employed merely for facilitating the description of the present disclosure, and those terms have no particular meaning in themselves. Thus, "module", "component" and "unit" can be used together.

In the following description, suffixes such as "module", "component", or "unit" used to indicate elements are used merely for facilitating the explanation of the present disclosure, and have no peculiar meaning by themselves. Thus, "module", "component" or "unit" may be used mixedly.

With the introduction of new coding techniques into the HEVC, coding time complexity is increased by several times compared with the H264/AVC. A division process based on a CU quadtree includes traversing all possible CU division results of a current Coding Tree Unit (CTU) ($64 \times 64$ pixels), respectively calculating a Rate Distortion Cost (RDC) based on each CU division mode, and finally selecting the CU division mode with the minimum RDC for coding. Although the division process can reduce bit rate, the division process takes up 80% of coding time, and increases coding complexity by several times. Therefore, how to effectively find an optimal CU division mode in the HEVC is important for improving execution efficiency of H265/HEVC coding.

Since the Vision Transform (ViT) mechanism is proposed, the patch-based attention mechanism, as compared with conventional Convolutional Neural Network (CNN), attracts wide attention in the field of image video application due to the advantages in terms of desired training data, computational complexity, and practical performance.

In view of a conflict between code rate and coding complexity, based on the ViT attention mechanism, the present disclosure provides a ViT-based CU division method for video coding and decoding.

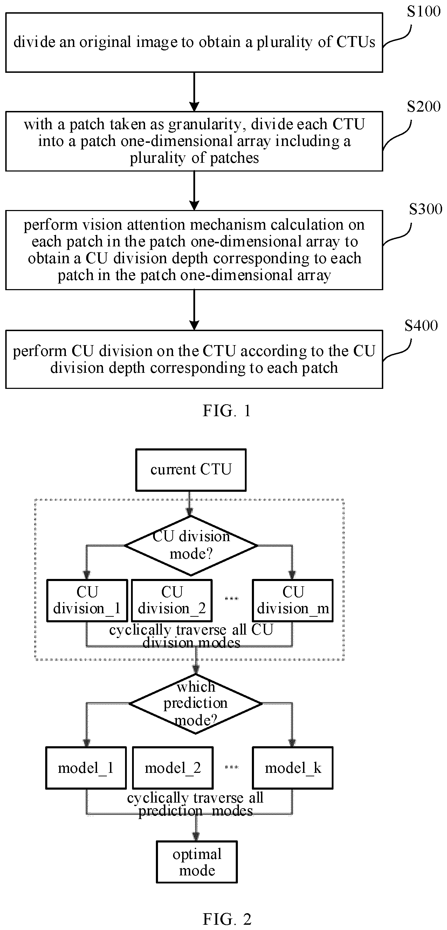

The present disclosure provides a CU division method. As shown in FIG. 1, the method includes the following operations S100 to S400.

At operation S100, dividing an original image to obtain a plurality of CTUs.

At operation S200, with a patch taken as granularity, dividing each CTU into a patch one-dimensional array including a plurality of patches.

At operation S300, performing vision attention mechanism calculation on each of the patches in the patch one-dimensional array to obtain a CU division depth corresponding to each of the patches in the patch one-dimensional array.

At operation S400, performing CU division on the CTU according to the CU division depth corresponding to each patch.

The present disclosure provides the CU block division method for video coding and decoding based on the vision attention mechanism. The original image is first divided into a plurality of CTUs. A current CTU pixel block (e.g., a $64 \times 64$ pixel block) is divided into a plurality of patches according to the CU minimum division unit, that is, each patch has a size of the CU minimum division unit.

With the patches used as basic blocks, the patches are coded respectively using the pixel values included in the patches. All the patches in one CTU are arranged into a one-dimensional array in unit of patch. For example, a CTU of $64 \times 64$ pixels may be divided into 256 patches of $4 \times 4$ pixels, and the 256 patches originally arranged in a matrix is transformed into a linearly arranged patch one-dimensional array. It should be noted that "one-dimensional" is for the patches, rather than a dimension of the pixels. For the pixels, the dimension is 256*16, with 256 representing the number of the patches, and 16 representing the number of the pixels contained in each patch.

Then, the above coding information is subjected to linear transformation projection and addition of position coding information, and is then input to a Vision Transformer (ViT). The CU division depth corresponding to each patch is obtained after a series of calculations of a Vision Transformer attention mechanism are performed, and CU division is then performed on the current CTU according to the CU division depth corresponding to each patch. All the CTUs of the original image are subjected to CU division with the above method, thereby realizing CU division of the whole original image.

FIG. 2 is a schematic diagram illustrating the overall flow of coding according to the H265/HEVC protocol. **In** FIG. 2, the part enclosed in the dashed box is where a ViT network of the present disclosure replaces a conventional algorithm. As can be seen from FIG. 2, the present disclosure adopts the ViT network to replace the conventional calculation method in which cyclic traversal is performed to find the optimal CU division mode.

Compared with the conventional H265/HEVC, the ViT-based CU division method for video coding and decoding provided in the present disclosure avoids, by reasonable training and learning, the coding complexity caused by the traversal of all the CU division modes in the conventional CU division method. Moreover, compared with the conventional CNN, the ViT-based CU division method for video coding and decoding provided in the present disclosure reduces computational complexity of the neural network and increases coding speed. By learning of the attention mechanism, the ViT-based CU division method for video coding and decoding provided in the present disclosure improves high real-time performance and reliability of the H265/HEVC protocol while ensuring video coding quality.

**In** some embodiments, the CTU is divided into a plurality of layers according to values of depths of the CTU, and performing CU division on the CTU according to the CU division depth corresponding to each patch (i.e., operation S400) includes: performing CU division on the CTU in order of depth and layer by layer according to the CU division depth corresponding to each patch.

Further, performing CU division on the CTU in order of depth and layer by layer according to the CU division depth corresponding to each patch includes: from a layer with a current depth i being 0, traversing and counting the number Ni of all the patches, the corresponding CU division depth of which is greater than i, in the CTU, with i denoting the current depth, and i and Ni being natural numbers; if Ni is greater than a CU division threshold $\alpha i$ set in advance for the current depth i, dividing current CUs in the CTU, and continuing to perform CU division for a next depth, with $\alpha i$ being greater than 0; and if Ni is less than or equal to the CU division threshold $\alpha i$, CU division of the CTU is ended.

According to the CU division method provided in the present disclosure, the current CTU is subjected to traversal, counting, and CU division at each depth according to the CU division depth corresponding to each patch. The conventional method of cyclically traversing all the CU division modes is replaced, so that the computational complexity caused by traversing all the CU division modes is avoided, and the coding speed is increased.

In the embodiments of the present disclosure, a CU division threshold is set in advance for each depth, and is taken as a determination condition for assessing whether CU division is needed at the current depth.

For example, the depths of the CTU range from 0 to 3, the CTU is accordingly divided into four layers from top to bottom, i.e., $64\times64\rightarrow32\times32\rightarrow16\times16\rightarrow8\times8$, and a CU division threshold $\alpha i$ is set in advance for each layer. According to the CU division depth corresponding to each patch obtained by the vision attention mechanism calculation as described above, at each layer, the number of the patches having the CU division depth exceeding the current depth is counted and taken as a patch depth predicted value number of the current depth. If the patch depth predicted value number of the current depth is greater than the CU division threshold set in advance for the current depth, it is determined that the current CU is dividable, so that the current CU is divided into four parts. After the division is completed at one layer, at a next layer, a patch depth predicted value number of a next depth is counted and compared with the CU division threshold corresponding to the next depth, so as to determine whether to perform CU division, and so on. In this way, the CU division of the CTU is performed by recursively performing traversal and counting in order of depth and layer by layer from top to bottom until a patch depth predicted value number of a certain depth is less than or equal to the CU division threshold for the certain depth, and then the CU division of the CTU is ended.

It should be noted that the preset CU division threshold is not limited to being compared with the patch depth predicted value number, and more comparison rules may be added or perform the comparison for other indexes, for example, a proportion of the patch depth predicted value number to a total number of the patches at the current layer, or a patch depth is compared with an actual depth of a currently traversed CU.

**In** some embodiments, performing vision attention mechanism calculation on each of the patches in the patch one-dimensional array to obtain the CU division depth corresponding to each of the patches in the patch one-dimensional array (i.e., operation S300) includes: performing dimension expansion on the patch one-dimensional array to obtain an input array after dimension expansion; performing vision attention mechanism calculation on the input array to obtain a first calculation result; performing fully-connected-layer calculation on the first calculation result to obtain a second calculation result; and performing Softmax-layer calculation on the second calculation result to obtain the CU division depth corresponding to each of the patches in the patch one-dimensional array.

**In** some embodiments, performing dimension expansion on the patch one-dimensional array includes: performing linear projection on the patch one-dimensional array, and adding position coding information, so as to obtain the input array after dimension expansion.

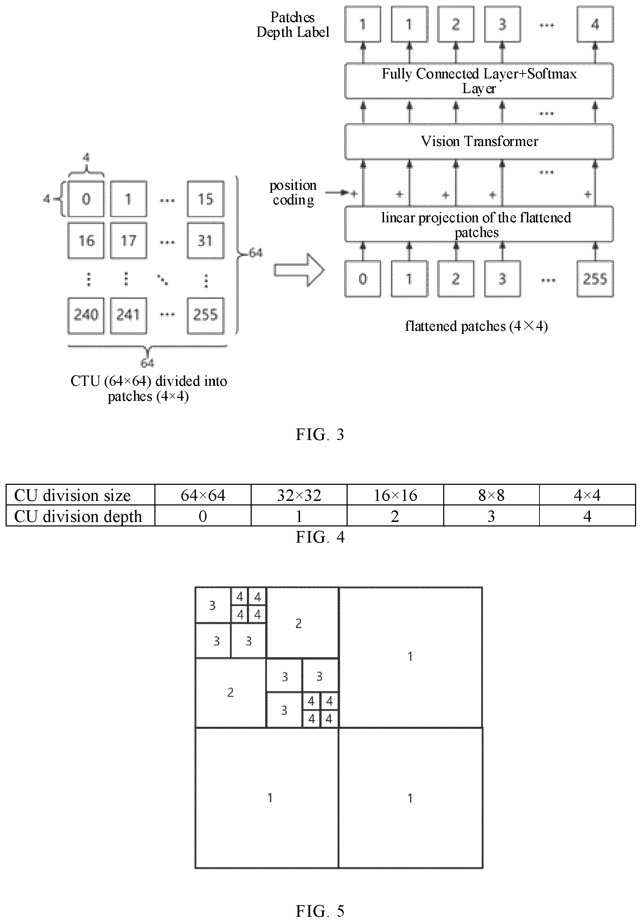

FIG. 3 is a schematic diagram of a ViT-based CU division structure for video coding and decoding according to the present disclosure. In FIG. 3, on the left is a schematic diagram illustrating division of a CTU ($64\times64$) divided into patches having sizes of $4\times4$; and on the right is a schematic diagram illustrating flattening the patches obtained by division to obtain a one-dimensional input, performing linear projection, adding position coding information, inputting into a Vision Transformer layer, an output corresponding to each patch which is obtained after performing vision attention mechanism calculation on each patch is taken as an input into a Fully Connected Layer and then into a Softmax Layer to obtain the CU division depth corresponding to each patch, and mapping to Patches Depth Label.

In some embodiments, performing vision attention mechanism calculation on each of the patches in the patch one-dimensional array to obtain the CU division depth corresponding to each of the patches in the patch one-dimensional array (i.e., operation S300) further includes: performing at least one round of vision attention mechanism training by back propagation to obtain a depth predicted value of each patch; and determining the depth predicted value of the patch which obtains the minimum loss by a loss function as the CU division depth corresponding to each patch in the patch one-dimensional array.

In the embodiments of the present disclosure, the CU division depth corresponding to each patch in the patch one-dimensional array may be taken as a label corresponding to each patch. After the CU division depth corresponding to each patch is obtained by vision attention mechanism calculation, the Vision Transformer layer, the fully connected layer, and the Softmax layer may be further trained by back propagation to obtain the depth predicted value of each patch, the depth predicted value of each patch is compared with a real label, the depth predicted value of each patch is evaluated with a Softmax-layer loss function, and it is determined to be the optimal depth predicted value if the minimum loss is obtained.

In the embodiments of the present disclosure, each patch may be a 4*4 pixel block divided according to the CU minimum division unit, and each CTU may be a 64*64 pixel block.

FIG. 4 is a correspondence table of CU division sizes and CU division depths, a CU division size may be any one of $64\times64$, $32\times32$, $16\times16$, $8\times8$, and $4\times4$, and the corresponding CU division depths are 0, 1, 2, 3, and 4, respectively.

FIG. 5 is a schematic diagram of a CU division mode for a CTU ($64\times64$), and CUs and corresponding division depths are marked.

In the training and learning processes of the vision attention mechanism, after the CU division depth is predicted for each patch based on ViT, the CU depth predicted values of the patches may be counted, and the CTU may be subjected to counting and division again from top to bottom.

The basic operations of deep learning which can be used in the embodiments of the present disclosure include, but are not limited to: ViT, Deconvolution, Rectified Linear Unit (ReLU), Sigmoid, Full-Connection, and Reshape.

It should be noted that, in addition to using the ViT network structure, the network structures such as a Residual Network (ResNet), a CNN, and a Squeeze-and-Excitation Residual Network (SE-ResNet) may be used to replace the ViT network structure to achieve CU division.

The CU division method provided in the embodiments of the present disclosure can be applied to all scenarios where video coding is needed, such as a Video Processing Unit (VPU), a built-in algorithm of a video codec chip, an intelligent cockpit, video compression, video transmission, and so on.

The specific application of the CU division method provided in the present disclosure is illustrated below by an example.

FIG. 3 illustrates the overall flow of the present disclosure, an input is a CTU ($64\times64$) video CTU in the H265/HEVC, and an output is a division depth corresponding to each patch obtained after the CTU is divided in unit of patch ($4\times4$). CU division may be finally completed according to a count of the depths corresponding to the patches in the CTU.

The example mainly includes the operations of data set and label preparation, Vision Transformer training, Vision Transformer reasoning, and CU counting and division. Implementation details of each operation are described below.

Operation 1: data set and label preparation

A video sequence image may be acquired from public data sets such as Vimeo90K, REDS4, and VID4 as original data. The original image is partitioned to obtain CTUs having sizes of $64\times64$, CU division modes of each CTU are subjected to exhaustive traversal and are sequentially subjected to RDC calculation, and the CU division mode with the minimum RDC is selected. Finally, the CTU is divided into patches having sizes of $4\times4$, and each patch is assigned with a depth (a depth label) of a CU to which the patch belongs.

Operation 2: Vision Transformer training

The obtained patch data of each CTU and the corresponding labels are respectively transformed into one-dimensional data, and the patch data of each CTU after being transformed may be expressed as input = [patch_0, patch_1, patch_2, ... patch_255], where patch_0, patch_1, patch_2, ... patch_255 are patch coding data, and a dimension of the input is 256*16; and the corresponding labels of the patches may be expressed as label= [label_0, label_1, label_2, ... label_255], where label_0, label_1, label_2, ... label_255 respectively represent the division depths of the CUs to which patch_0, patch_1, patch_2, ... patch_255 belong. The input is then subjected to linear projection and addition of position coding information, at this time, the dimension of the input is 256*768. Afterwards, the input is input into the Vision transform for attention mechanism calculation to obtain an intermediate result output of a ViT result output ViT_output = [ViT_0, ViT_1, ViT_2, ... ViT_255], the ViT_output is then taken as an input of the subsequent fully connected layer and Softmax layer to obtain the depth corresponding to each patch, i.e., depth = [dep_0, dep_1, dep_2, ... dep_255], the depth is compared with the real label, and the Vision Transform, the fully connected layer, and the Softmax layer are trained by back propagation. The loss function of the Softmax layer is a multi-class cross entropy loss:

$$loss = -\sum_{i=1}^{C} p(x_i) * \log(p(x_i)) \qquad (1)$$

where C denotes the number of depth classes and C=5, the depth label may take the value of 0, 1, 2, 3 or 4 in the present disclosure, and $p(x_i)$ denotes the probability of each depth possible outcome.

Operation 3: Vision Transformer reasoning

After the training of the Vision Transformer, the fully connected layer, and the Softmax layer is completed, in a reasoning stage, as described in the operation of Vision Transformer training, the one-dimensional data, which is obtained by transformation of the patches of the current CTU, is taken as an input, and the input is input into the Vision Transformer, the fully connected layer, and the Softmax layer to obtain the depth corresponding to each patch.

Operation 4: CU counting and division

The division thresholds $\alpha0$, $\alpha1$, $\alpha2$, $\alpha3$ are set, and the CTU is recursively subjected to traversal, counting, and division from top to bottom ($64\times64\rightarrow32\times32\rightarrow16\times16\rightarrow8\times8$).

1) Firstly, the patch depth predicted value number greater than the depth of 0 in a top layer ($64\times64$) of the CTU (the depth is 0, and the size is $64\times64$) is counted; if a proportion of the patch depth predicted value number > $\alpha0$, the current CTU is divided into four parts; and if the proportion of the patch depth predicted value number is less than or equal to $\alpha0$, CU division is ended.

2) The patch depth predicted value number greater than the depth of 1 in all $32\times32$ blocks (CTU) (the depth is 1, and the sizes are $32\times32$) is counted; if a proportion of the patch depth predicted value number>$\alpha1$, the current CU is divided into four parts; and if the proportion of the patch depth predicted value number is less than or equal to $\alpha1$, division of the current CU is ended.

3) The patch depth predicted value number greater than the depth of 2 in all $16\times16$ blocks (CTU) (the depth is 2, and the sizes are $16\times16$) is counted; if a proportion of the patch depth predicted value num-

ber>$\alpha2$, the current CU is divided into four parts; and if the proportion of the patch depth predicted value number is less than or equal to $\alpha2$, division of the current CU is ended.

4) The patch depth predicted value number greater than the depth of 3 in all 8×8 blocks (CTU) (the depth is 3, and the sizes are 8×8) is counted; if a proportion of the patch depth predicted value number>$\alpha3$, the current CU is divided into four parts; and if the proportion of the patch depth predicted value number is less than or equal to $\alpha3$, division of the current CU is ended.

Finally, a final division mode of the CUs in the CTU is obtained and used in subsequent video coding and decoding processes.

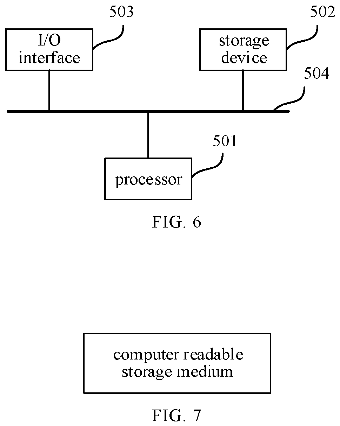

The present disclosure further provides an electronic device, as shown in FIG. 6, including: one or more processors 501; a storage device 502 having stored thereon one or more programs which, when executed by the one or more processors, cause the one or more processors to implement the CU division method according to the embodiments of the present disclosure.

In addition, the electronic device may further include one or more input/output (I/O) interfaces 503 connected between the one or more processors and the storage device and configured to enable information interaction between the one or more processors and the storage device.

The processor 501 is a device having data processing capability, and includes, but is not limited to, a Central Processing Unit (CPU); the storage device 502 is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write) interface 503 is connected between the processor 501 and the storage device 502, is capable of enabling the information interaction between the processor 501 and the storage device 502, and includes, but is not limited to, a data bus (Bus).

In some embodiments, the processor 501, the storage device 502, and the I/O interface 503 are connected to each other through a bus 504, and then are connected to other components of a computing device.

The present disclosure further provides a computer readable storage medium. As shown in FIG. 7, the computer readable storage medium has stored thereon a computer program which, when executed by a processor, implements the CU division method according to the embodiments of the present disclosure.

As stated above, compared with the previous advanced video coding standard H264/ AVC protocol, the H265/ HEVC greatly improves the compression ratio, but the coding complexity is also increased by several times, and the calculation method in which all the CU division modes are traversed and the RDCs are calculated to select the optimal CU division mode takes up most of the time consumed by the H265/HEVC coding. The present disclosure provides the ViT-based CU division method for video coding and decoding, which can, by taking the minimum basic block for division of the CTU as the input, outputting each division depth corresponding to the minimum basic block, performing attention mechanism calculation on the patches, improve video coding efficiency and enable real-time high-quality video coding.

It should be understood by those of ordinary skill in the art that the functional modules/units in all or some of the operations, the systems, and the devices in the method disclosed above may be implemented as software, firmware, hardware, or suitable combinations thereof.

If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM, a Read-Only Memory (ROM), an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The preferable embodiments of the present disclosure are described above with reference to the drawings, but the scope of the claims of the present disclosure is not limited thereto. Any modification, equivalent replacement and improvement made by those of ordinary skill without departing from the scope and essence of the present disclosure should be considered to fall within the scope of the claims of the present disclosure.

## Claims

1. A coding unit division method, comprising:

   dividing an original image to obtain a plurality of coding tree units;

   with a patch taken as granularity, dividing each of the coding tree units into a patch one-dimensional array comprising a plurality of patches;

   performing vision attention mechanism calculation on each of the patches in the patch one-dimensional array to obtain a coding unit division depth corresponding to each of the patches in the patch one-dimensional array; and

   performing, for each of the coding tree units, coding unit division on the coding tree unit according to the coding unit division depth corresponding to each of the patches.

2. The coding unit division method of claim 1, wherein each of the coding tree units is divided into a plurality of layers according to values of depths of each of the coding tree units, and performing coding unit division on the coding tree unit according to the coding unit division depth corresponding to each of the patches comprises:

   performing coding unit division on the coding tree unit in order of depth and layer by layer according to the coding unit division depth corresponding to each of the patches.

3. The coding unit division method of claim 2, wherein performing coding unit division on the coding tree unit in order of depth and layer by layer according to the coding unit division depth corresponding to each of the patches comprises:

   from a layer with a current depth i being 0, traversing and counting a number Ni of all the patches, the corresponding coding unit division depth of which is greater than i, in the coding tree unit, wherein i denotes the current depth, and i and Ni are natural numbers;

   if Ni is greater than a coding unit division threshold $\alpha i$ set in advance for the current depth i, dividing current coding units in the coding tree unit, and continuing to perform coding unit division for a next depth, wherein $\alpha i$ is greater than 0; and

   if Ni is less than or equal to the coding unit division threshold $\alpha i$ set in advance for the current depth i, coding unit division of the coding tree unit is ended.

4. The coding unit division method of claim 1, wherein performing vision attention mechanism calculation on each of the patches in the patch one-dimensional array to obtain the coding unit division depth corresponding to each of the patches in the patch one-dimensional array comprises:

   performing dimension expansion on the patch one-dimensional array to obtain an input array after dimension expansion;

   performing vision attention mechanism calculation on the input array to obtain a first calculation result;

   performing fully-connected-layer calculation on the first calculation result to obtain a second calculation result; and

   performing Softmax-layer calculation on the second calculation result to obtain the coding unit division depth corresponding to each of the patches in the patch one-dimensional array.

5. The coding unit division method of claim 4, wherein performing dimension expansion on the patch one-dimensional array comprises:
   performing linear projection on the patch one-dimensional array, and adding position coding information, so as to obtain the input array after dimension expansion.

6. The coding unit division method of claim 4, wherein performing vision attention mechanism calculation on each of the patches in the patch one-dimensional array to obtain the coding unit division depth corresponding to each of the patches in the patch one-dimensional array further comprises:

   performing at least one round of vision attention mechanism training by back propagation to obtain a depth predicted value of each of the patches; and

   determining the depth predicted value of a patch which obtains a minimum loss by a loss function as the coding unit division depth corresponding to each of the patches in the patch one-dimensional array.

7. The coding unit division method of any one of claims 1 to 6, wherein the patches are 4*4 pixel blocks obtained by division according to a coding-unit minimum division unit.

8. The coding unit division method of any one of claims 1 to 6, wherein the coding tree units are 64*64 pixel blocks.

9. An electronic device, comprising:

one or more processors; and
a storage device having stored thereon one or more programs which, when executed by the one or more processors, cause the one or more processors to implement the coding unit division method of any one of claims 1 to 8.

10. The electronic device of claim 9, further comprising: one or more input/output, called I/O, interfaces, which are connected between the one or more processors and the storage device and configured to enable information interaction between the one or more processors and the storage device.

11. A computer readable storage medium having stored thereon a computer program which, when executed by a processor, implements the coding unit division method of any one of claims 1 to 8.

divide an original image to obtain a plurality of CTUs

S100

with a patch taken as granularity, divide each CTU into a patch one-dimensional array including a plurality of patches

S200

perform vision attention mechanism calculation on each patch in the patch one-dimensional array to obtain a CU division depth corresponding to each patch in the patch one-dimensional array

S300

perform CU division on the CTU according to the CU division depth corresponding to each patch

S400

FIG. 1

current CTU

CU division mode?

| CU division_1 | CU division_2 | ... | CU division_m |

cyclically traverse all CU division modes

which prediction mode?

| model_1 | model_2 | ... | model_k |

cyclically traverse all prediction modes

optimal mode

FIG. 2

Patches
Depth Label

| 1 | 1 | 2 | 3 | ⋯ | 4 |

Fully Connected Layer+Softmax Layer

Vision Transformer

position
coding → +

linear projection of the flattened patches

| 0 | 1 | 2 | 3 | ⋯ | 255 |

flattened patches (4×4)

4

4 [ 0 | 1 | ⋯ | 15 ]
16 | 17 | ⋯ | 31
⋮ | ⋮ | ⋱ | ⋮
240 | 241 | ⋯ | 255

64

64

CTU (64×64) divided into
patches (4×4)

FIG. 3

| CU division size | 64×64 | 32×32 | 16×16 | 8×8 | 4×4 |
|---|---|---|---|---|---|
| CU division depth | 0 | 1 | 2 | 3 | 4 |

FIG. 4

FIG. 5

503

502

I/O interface

storage device

504

501

processor

FIG. 6

computer readable storage medium

FIG. 7

## INTERNATIONAL SEARCH REPORT

| International application No. |
| --- |
| **PCT/CN2023/101495** |

### A. CLASSIFICATION OF SUBJECT MATTER

H04N19/149(2014.01)i;  G06N3/08(2023.01)i

According to International Patent Classification (IPC) or to both national classification and IPC

### B. FIELDS SEARCHED

Minimum documentation searched (classification system followed by classification symbols)

H04N,G06N

Documentation searched other than minimum documentation to the extent that such documents are included in the fields searched

Electronic data base consulted during the international search (name of data base and, where practicable, search terms used)

CNABS; CNTXT, CNKI; CJFD; DWPI, ENTXTC, WPABSC; VCN; IEEE: 分割, 划分, 视觉, 注意力机制, 深度, 编码树, 图像块, divid+, partition, vision 1w transfromer, vit, depth, CTU, coding 1w tree, patch

### C. DOCUMENTS CONSIDERED TO BE RELEVANT

| Category* | Citation of document, with indication, where appropriate, of the relevant passages | Relevant to claim No. |
| --- | --- | --- |
| Y | CN 113382245 A (UNIVERSITY OF SCIENCE AND TECHNOLOGY OF CHINA) 10 September 2021 (2021-09-10)<br>    description, paragraphs 27-193 | 1-3, 7-11 |
| Y | CN 111510728 A (BEIJING UNIVERSITY OF TECHNOLOGY) 07 August 2020 (2020-08-07)<br>    description, paragraphs 32-65 | 1-3, 7-11 |
| A | CN 114286093 A (HANGZHOU DIANZI UNIVERSITY) 05 April 2022 (2022-04-05)<br>    entire document | 1-11 |
| A | CN 113709455 A (BEIJING JIAOTONG UNIVERSITY) 26 November 2021 (2021-11-26)<br>    entire document | 1-11 |
| A | CN 114550033 A (ZHUHAI HENGLE MEDICAL TECHNOLOGY CO., LTD.) 27 May 2022 (2022-05-27)<br>    entire document | 1-11 |

☐ Further documents are listed in the continuation of Box C.          ☑ See patent family annex.

| | |
| --- | --- |
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **29 August 2023** | **31 August 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/101495**

| Patent document cited in search report | | | Publication date (day/month/year) | Patent family member(s) | Publication date (day/month/year) |
|---|---|---|---|---|---|
| CN | 113382245 | A | 10 September 2021 | None | |
| CN | 111510728 | A | 07 August 2020 | None | |
| CN | 114286093 | A | 05 April 2022 | None | |
| CN | 113709455 | A | 26 November 2021 | None | |
| CN | 114550033 | A | 27 May 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210770312